# EUROPÄISCHE PATENTSCHRIFT

(11) **EP 0 372 117 B1**
(45) Veröffentlichungstag und Bekanntmachung des Hinweises auf die Patenterteilung: **06.04.1994**
(21) Anmeldenummer: 88120584.3
(22) Anmeldetag: 09.12.1988
(51) Int. Cl.: F16K 5/06

(54) **Kugelhahn mit kugelförmigem metallischen oder keramischen Küken**
Cock with a spherical metal or ceramic plug
Robinet à boisseau sphérique métallique ou céramique

(43) Veröffentlichungstag der Anmeldung: 13.06.1990
(73) Patentinhaber: Hartmann, Werner, Dipl.-Ing., D-31303 Burgdorf (DE)
(72) Erfinder: Hartmann, Werner, Dipl.-Ing., D-31303 Burgdorf (DE)
(74) Vertreter: Patentanwälte Thömen & Körner

(56) Entgegenhaltungen:
- DE-U- 8 632 731
- FR-A- 2 202 572
- US-A- 4 147 327
- US-A- 4 235 418
- US-A- 4 388 945

## Beschreibung

Die Erfindung betrifft einen Kugelhahn mit kugelförmigem metallischen oder keramischen Küken gemäß dem Oberbegriff des Patentanspruchs.

Es wird also ausgegangen von einem Kugelhahn, wie z.B. aus der US-A- 4388945 bekannt, mit einem kugelförmigen metallischen oder keramischen Küken, welches fliegend oder zapfengelagert ist. Der Zapfen ist in der Kugel des Kükens verschiebbar oder fest verbunden angeordnet, oder die Drehung des Kükens wird durch einen Schaltzapfen bewirkt. Das Küken ist so in einem Gehäuse angeordnet, daß es sich in der Längs- und Hochachse zwischen Sitzringen zentriert. Die Sitzringe sind in ihren Führungen für den Ein- und Ausbau längsverschieblich angeordnet, gegenüber dem Gehäuse abgedichtet und durch Federn gegen das Küken gepreßt.

Bei solchen Kugelhähnen ist die Abdichtung des Kükens bei hohen Drücken oft problematisch, da die bekannten verformbaren Weichdichtungen sich nicht bewährt haben. Ein weiteres Problem stellt der Ein- und Ausbau der Dichtungen dar.

Weiter ist an sich schon bekannt, einen Hahn mit einem Küken und Sitzringe aus Keramischem Material zu versehen, siehe z.B. die DE-U- 86 32 731.3. Dennoch besteht das Problem der Abdichtung der Sitzringe gegenüber dem Gehäuse.

Der Erfindung liegt die Aufgabe zugrunde, einen einfach ausgebildeten Hahn mit kugelförmigem metallischen oder keramischen Küken für Rohrleitungen zu schaffen, welches hohen Drücken ausgesetzt ist und dessen Sitzringe für die Abdichtung unmittelbar auf entsprechenden Gegenflächen des Kükens aufliegen, so daß ohne zusätzliche verformbare Weichdichtungen sowohl bei niedrigen und hohen Drücken wie auch bei Unterdruck (Vakuum) eine Dichtung im wesentlichen durch die Oberflächengüte der aufeinanderliegenden Kugelflächen gesichert ist, wobei ein einfacher Ein- und Ausbau gewährleistet wird.

Die Lösung dieser Aufgabe erfolgt durch die im Patentanspruch angegebenen Merkmale.

Bei der Erfindung bestehen die Sitzringe aus metallischen oder keramischen Werkstoffen und liegen unmittelbar auf den metallischen oder keramischen Gegenflächen des Kükens auf.

Gegenüber dem Gehäuse sind die Sitzringe durch C-förmige federnde metallische Dichtringe abgedichtet, welche durch auf den Sitzringen aufgeschrumpfte Halteringe auf den Sitzringen selbst gehalten sind.

Die erfindungsgemäße Anordnung ermöglicht es, daß die aus den Sitzringen, den metallischen Dichtringen und den aufgeschrumpften Halteringen gebildete Einheit als Ganzes bei der Kugelmontage bzw. der Montage des Kükens verschiebbar ist. Dabei bilden die Sitzringe eine Hartdichtung, die durch die Schraubenfedern gegen das Küken gepreßt wird.

Der Hahn mit dem kugelförmigen Küken ist so angeordnet, daß sich das Küken in der Längs- und Hochachse zwischen den metallischen Sitzringen zentriert.

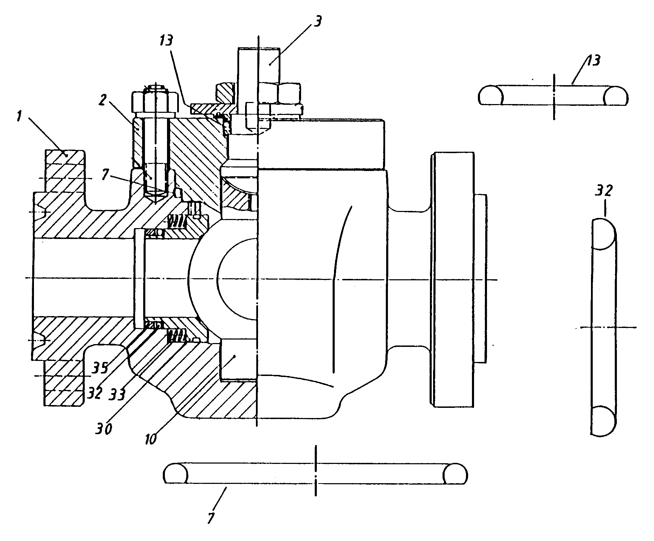

Anhand des in der Zeichnung dargestellten Ausführungsbeispiels wird die Erfindung nachfolgend erläutert.

Die Zeichnung stellt eine Querschnittsansicht eines erfindungsgemäßen Kugelhahns mit einem kugelförmigen metallischen oder keramischen Küken 10 dar.

Der Kugelhahn besitzt ein einteiliges Gehäuse 1, welches durch einen Deckel 2 verschlossen wird (Top Entry). Zur Abdichtung dienen Sitzringe 30 aus metallischen oder keramischen Werkstoffen, die unmittelbar auf den entsprechenden metallischen oder keramischen Gegenflächen des Kükens 10 aufliegen.

Die metallisch dichtenden Sitzringe 30 werden durch Schraubenfedern 33 gegen das im Gehäuse 1 bzw. im Deckel 2 gelagerte Küken 10 gepreßt. Die Sitzringe 30 werden ihrerseits durch C-förmige federnde metallische Dichtringe 32 gegenüber dem Gehäuse 1 abgedichtet, wobei die Dichtringe 32 durch aufgeschrumpfte Halteringe 35 auf den Sitzringen 30 gehalten werden.

In der Zeichnung sind ferner noch ein Abdichtring 7 am Gehäuse 1 und ein Abdichtring 13 für den Schaltzapfen 3 dargestellt.

In der zuvor beschriebenen Weise können der Abdichtring 7 am Gehäuse 1 sowie der Abdichtring 13, der den Schaltzapfen 3 gegen den Deckel 2 abdichtet, aus C-förmigen federnden Metallringen bestehen, um eine Feuersicherheit zu gewährleisten.

## Patentansprüche

1. Kugelhahn mit kugelförmigem metallischen oder keramischen Küken (10), das fliegend oder zapfengelagert ist, wobei der Zapfen in der Kugel des Kükens (10) verschiebbar oder fest mit ihr verbunden ist, oder wobei die Drehung des Kükens (10) durch einen Schaltzapfen (3) bewirkt wird, und wobei das Küken (10) und zugehörige Sitzringe (30) in ein einteiliges, durch einen Deckel (2) von oben verschlossenes Gehäuse (1) eingebaut sind, wobei die Sitzringe (30) in ihren Führungen für den Ein- und Ausbau längsverschieblich angeordnet und gegenüber dem Gehäuse (1) abgedichtet sind, wobei die Sitzringe (30) durch Federn (33) gegen das Küken (10) gepreßt sind, **dadurch gekennzeichnet**, daß die Sitzringe (30) aus metallischen oder keramischen Werkstoffen bestehen und unmittelbar auf den entsprechenden metallischen oder keramischen Gegenflächen des Kükens (10) aufliegen, und daß die Abdichtung der Sitzringe (30) gegenüber dem Gehäuse (1) durch C-förmige federnde metallische Dichtringe (32) gebildet ist, welche durch auf den Sitzringen (30) aufgeschrumpfte Halteringe (35) auf den Sitzringen (30) gehalten sind.

## Claims

1. Ballcock, comprising spherical metallic or ceramic plug (10), which is overhung or trunion mounted, the shaft being slidable in the ball of the plug (10) or fixed to it, or the rotation of the plug (10) being performed by an indexing shaft (3), and wherein the plug (10) and associated seating rings (30) are installed in a single-piece top-entry casing (1), closed by a cover (2), wherein the seating rings (30) are disposed in their guides longitudinally slidable for installation and removal and sealed with respect to the casing (1), wherein the seating rings (30) are pressed by springs (33) against the plug (10), characterized in that the seating rings (30) are of metallic or ceramic materials and bear directly against the corresponding metallic or ceramic counter-surfaces of the plug (10), and that the sealing of the seating rings (30) with respect to the casing (1) is formed by C-shaped, resilient metallic sealing rings (32), which are held on the seating rings (30) by holding rings (35), shrunk onto the seating rings (30).

## Revendications

1. Robinet à boisseau sphérique métallique ou céramique (10) qui est flottant ou à palier de tourillon, le tourillon étant décalable dans le globe du boisseau (10) ou relié fixement à lui, ou la rotation du boisseau (10) étant effectuée par un pivot de commande (3), et le boisseau (10) et les bagues de siège (30) étant logés dans une enveloppe (1) d'une seule pièce, verrouillée par le haut au moyen d'un couvercle (2), les bagues de siège (30) étant disposées logitudinalement dans leurs glissières pour le montage et le démontage, et rendues étanches par rapport à l'enveloppe (1), les bagues de siège (30) étant repoussées par des ressorts (33) contre le boisseau (10), caractérisé en ce que les bagues de siège (30) sont constituées de matières métalliques ou céramiques et s'appuient directement sur les contre-surfaces métalliques ou céramiques correspondantes du boisseau (10), et en ce que l'étanchéité des bagues de siège (30) par rapport à l'enveloppe (1) est assurée par des bagues d'étanchéité (32) élastiques en forme de C, qui sont retenues sur les bagues de siège par des bagues de support (35) qui sont frettées sur les bagues de siège (30).
